# EUROPEAN PATENT APPLICATION

(11) **EP 2 579 153 A1**
(43) Date of publication of application: **10.04.2013**
(21) Application number: 11789840.3
(22) Date of filing: 01.06.2011
(51) Int. Cl.: G06F 9/445, G06F 13/00

(54) **INFORMATION GENERATION SYSTEM AND METHOD THEREFOR**

(30) Priority: 02.06.2010 JP 2010139907
(71) Applicant: Yoshida, Minoru, Ichikawa-shi, Chiba 272-0133 (JP)
(72) Inventor: Yoshida, Minoru, Ichikawa-shi, Chiba 272-0133 (JP)
(74) Representative: Cabinet Plasseraud
(86) International application number: PCT/JP2011/062560
(87) International publication number: WO 2011/152438

(57) **Abstract**

Provided are an information generation system and a method therefor capable of generating an operating system corresponding to a request from a user, wherein among operating system resource information managed by a server device, a desired operating system constituting component can be selectively transmitted to a client device. Among the operating system resource information and application resource information managed by a server device 20, a desired operating system constituting component and application is selectively transmitted to a client device 30.

## Description

### TECHNICAL FIELD

The present invention relates to an information generation system and a method therefor.

### BACKGROUND ART

In recent years, various processes are performed by accessing to a server device from a client device via internet line and by using software managed in the server device, i.e. various systems employing cloud computing have been developed and proposed.

### Prior Art Reference

### Patent Reference

Patent Reference 1: Japanese Patent Application Laid-Open Publication No. 2009-70375

### DESCRIPTION OF THE INVENTION

### Problems to be Solved by the Invention

It is an object of the present invention to provide an information generation system and a method therefor capable of generating an operating system corresponding to a request from a user by selectively transmitting a desired operating system configuration component to a client device among operating system resource information managed in a server device.

### Means for Solving the Problems

According to an embodiment of the present invention, an information generation system comprising a server device and a client device,
wherein the server device and the client device on which a predetermined activation medium is loaded are connected via a predetermined communication line,
wherein, in the activation medium, system activation resource information for generating a predetermined operation system and medium identification information of the inherent activation medium are stored by connecting the client device to the server device, and by communication between the client device and the server device,
wherein the server device comprises: an operation system resource storage unit storing operation system resource information which constitutes a plurality of operation system configuration components for generating the operation system used in the client device; an application resource storage unit storing application resource information which constitutes a plurality of applications; and an operating system configuration information storage unit binding together and storing the medium identification information of the inherent activation medium and the operating system configuration information which constitutes combined information of the operating system configuration components and the applications, and binding together and storing the identical medium identification information and the plurality of operating system configuration information,
wherein the client device comprises:
a readout control unit storing the system activation resource information in the system activation resource storage unit of an initial activation operating system storage unit and, and storing the medium identification information in an identification information storage unit of the initial activation operating system storage unit to read out the system activation resource information and the medium identification information from the activation medium when the activation medium is loaded on the client device;
an operating system configuration information acquisition unit acquiring the plurality of operating system configuration information by reading out the operating system configuration information that is bound and stored with the medium identification information of the inherent activation medium loaded on the client device from the operating system configuration information storage unit of the server device;
a display control unit displaying an operating system configuration information selection screen for prompting an user to select a desired operating system configuration information among the plurality of operating system configuration information based on the plurality of acquired operating system configuration information; and
an operating system generation unit generating a desired operating system by reading out the desired operating system configuration component from the operating system resource storage unit of the server device, by reading out the desired application from the application resource storage unit and storing the read out operating system configuration component in the operating system storage unit of the main activation operating system storage unit, and by storing the read out application in the application storage unit of the main activation operating system storage unit, based on the selected operating system configuration information when the desired operating system configuration information is selected among the plurality of the operating system configuration information corresponding to the selective operation of a user in an operation unit.

Furthermore, another embodiment of the preset invention, a method of generating information for an information generation system in which a client device and a server device on which a predetermined activation medium is loaded are connected via a predetermined communication line,
wherein, in the activation medium, a system activation resource information for generating a desired operation system and a medium identification information of the inherent activation medium are stored by connecting the client device to the server device, and by communication between the client device and the server device,
wherein the server device comprises:
an operation system resource storage unit storing operation system resource information which constitutes a plurality of operation system configuration components for generating the operation system used in the client device; an application resource storage unit storing application resource information which constitutes a plurality of applications; and an operating system configuration information storage unit binding together and storing the medium identification information of the inherent activation medium and the operating system configuration information which constitutes combined information of the operating system configuration components and the applications, and binding together and storing the identical medium identification information and the plurality of operating system configuration information,
wherein the method comprises:
   a readout step, when the activation medium is loaded on the client device, storing the system activation resource information in the system activation resource storage unit of initial activation operating storage unit, and storing the medium identification information in the identification information storage unit of the initial activation operating system storage unit by reading out the system activation resource information and the medium identification information from the activation medium;
   an operating system configuration information acquisition step acquiring the plurality of operating system configuration information by reading out the operating system configuration information that is bound and stored with the medium identification information of the inherent activation medium loaded on the client device from the operating system configuration information storage unit of the server device via the communication line;
   a display step displaying an operating system configuration information selection screen on a display unit for prompting an user to select desired operating system configuration information among the plurality of operating system configuration information based on the plurality of acquired operating system configuration information; and
   an operating system generation step generating a desired operating system, when the desired the operating system is selected among the plurality of operating system configuration information corresponding to selective operation of a user in an operating unit, by reading out the desired operating system configuration component from the operating system resource storage unit of the server device based on the selected operating system configuration information, by reading out the desired application from the application resource storage unit to store the operating system configuration component in the operating system storage unit of the medium activation operating system storage unit, and by storing the application in an activation system unit of the medium activation operating system storage unit.

According to the third embodiment of the present invention, a generating information system in which a client device and a server device on which a predetermined activation medium is loaded are connected via a predetermined communication line, wherein, in the activation medium, a system activation resource information for generating a predetermined operation system and a medium identification information of the inherent activation medium are stored by connecting the client device to the server device, and by communication between the client device and the server device, wherein the server device comprises: an operating system configuration information storage unit binding together and storing the medium identification information of the inherent activation medium and the operating system configuration information which constitutes combined information of the operating system configuration component and the application, and binding together and storing the identical medium identification information and the plurality of operating system configuration information,
wherein the client device comprises:
an operating system resource storage unit storing operating system resource information constituting the plurality of operating system configuration components for generating the operating system used in the client device;
an application resource storage unit storing application resource information constituting a plurality of applications;
a readout control unit storing the system activation resource information in the system activation resource storage unit of the initial activation operating system storage unit, and storing the medium identification information in an identification information storage unit of the initial activation operating system storage unit by reading out the system activation resource information and the medium identification information from the activation medium when the activation medium is loaded on the client device;
an operating system configuration information acquisition unit acquiring the plurality of the operating system configuration information by reading out the operating system configuration information that is bound and stored with the medium identification information of the inherent activation medium which is loaded on the client device from the operating system configuration information storage unit of the server device;
a display control unit displaying an operating system configuration information selection screen on a display unit for prompting an user to select a desired operating system configuration information among the plurality of operating system configuration information based on the plurality of acquired operating system configuration information; and
an operating system generation unit generating a desired operating system by reading out the desired operating system configuration component from the operating system resource storage unit of the server device, by reading out a desired application from the application resource storage unit to store the read out operating system configuration component in the operating system storage unit of the main activation operating system storage unit, and by storing the read out application in the application storage unit of the main activation operating system storage unit, based on the selected operating system configuration information when the desired operating system configuration information is selected among the plurality of the operating system configuration information corresponding to selective operation of a user in an operation unit.

According to the fourth embodiment of the present invention, a method of generating information for an information generation system in which a client device and a server device on which a predetermined activation medium is loaded are connected via a predetermined communication line, wherein, in the activation medium, a system activation resource information for generating a predetermined operation system and a medium identification information of the inherent activation medium are stored by connecting the client device to the server device, and by communication between the client device and the server device,
wherein the server device comprises: an operating system configuration information storage unit binding together and storing the medium identification information of the inherent activation medium and the operating system configuration information which constitutes combined information of the operating system configuration component and the application, and binding together and storing an identical medium identification information and the plurality of operating system configuration information,
wherein the client device comprises: an operating system resource storage unit storing an operating system resource information constituting the plurality of operating system configuration components for generating the operating system used in the client device; an application resource storage unit storing an application resource information constituting a plurality of applications; the method comprises:
a readout step storing system activation resource information in the system activation resource storage unit of the initial activation operating storage unit and storing medium identification information in an identification information storage unit of the initial activation operating system storage unit by reading out the system activation resource information and the medium identification information from the activation medium when the activation medium is loaded on the client device;
an operating system configuration information acquisition step acquiring the plurality of operating system configuration information by reading out the operating system configuration information that is bound and stored with the medium identification information of the inherent activation medium loaded on the client device from the operating system configuration information storage unit of the server device;
a display step displaying an operating system configuration information selection screen on a display unit for prompting an user to select a desired operating system configuration information among the plurality of operating system configuration information based on the plurality of acquired operating system configuration information; and
an operating system generation step generating a desired operating system, when a desired operating system is selected among the plurality of the operating system configuration information corresponding to selective operation of a user in an operating unit, by reading out the desired operating system configuration component from the operating system resource storage unit of the server device based on the selected operating system configuration information, by reading out the desired application from the application resource storage unit to store the operating system configuration component in the operating system storage unit of the main activation operating system storage unit, and by storing the read out application in an activation system unit of the main activation operating system storage unit.

### Effects of the Invention

According to an information generation system and a method therefor of the present invention, an operating system corresponding to a request from a user can be generated by selectively transmitting a desired operating system configuration component to a client device among operating system resource information managed in a server device.

### BRIEF DESCRIPTION OF THE DRAWINGS

Figure 1 shows a block diagram illustrating a configuration of an information generation system according to an embodiment of the present invention.
Figure 2 shows a flow chart illustrating an information generation process procedure according to an embodiment of the present invention.

### BEST MODE FOR CARRYING OUT THE PRESENT INVENTION

Hereinafter, embodiments of the present invention will be described with reference to the drawings.

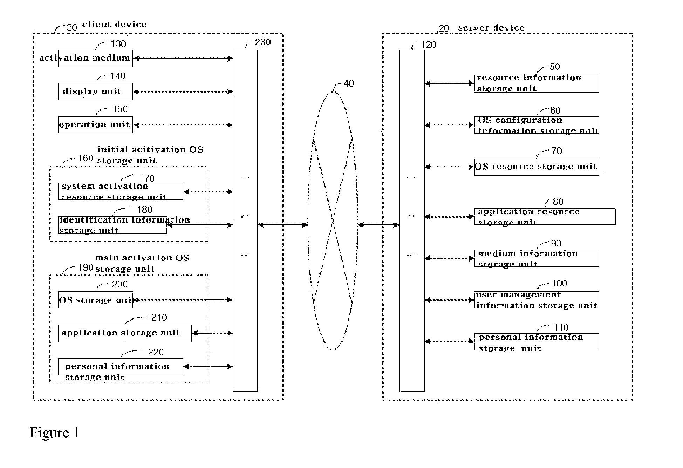

Figure 1 shows a configuration of an information generating system 10 according to an embodiment of the present invention. The information generation system 10 is formed by connecting a client device 30 constituting a personal computer to a server device 20 via a communication line 40 such as internet line, the server device 20 managing and storing operating system(OS) resource, application resource, and the like.

In the present embodiment, the client device 30 generates and uses an operating system corresponding to a request from a user by selectively acquiring a desired operating system configuration component among operating system resource information in the server device 20 without having an operating system or an application therein.

However, in the information generation system 10, an activation medium 130 is already prepared as a medium for loading on the client device 30. In the activation medium 130, an system application resource information for generating an operating system corresponding to a request of a user and a medium identification information constituting identification information of the inherent activation medium 130 for specifying the activation medium 130 are stored by connecting the client device 30 to the server device 20, and by acquiring a desired operating system configuration component from the server device 20.

Furthermore, a compact disc, an USB memory, a SD memory card, and the like are used as the activation medium 130.

Meanwhile, the server device 20 constitutes storage units 50-110 for storing several types of information. However, the operating system in the client device 30 is generated by at least one or more operating system configuration components. In the present embodiment, an operating system(OS) resource unit 70 stores operating system resource information constituting a plurality of operating system configuration components as a candidate for the operating system configuration component transmitting to the client device 30. Moreover, the operating system configuration components are stored in the operating system(OS) resource unit 70 in the state of encryption.

An application resource storage unit 80 stores application resource information constituting a plurality of applications as a candidate for an application transmitting to the client device 30. Examples of the applications include browser, office software, CAD software, multimedia compilation software, and the like. Moreover, the applications are stored in the application resource storage unit 80 in the state of encryption.

A resource information storage unit 50 binds together and stores an encryption key necessary for decoding the operating system configuration component for every operating system configuration component stored in the operating system(OS) resource storage unit 70 and a hashed value(i.e., a standard hashed value) that is information computed unequivocally from the operating system configuration component.

That is, the resource information storage unit 50 binds together and stores resource identification information of the inherent operating system configuration component, an encryption key necessary for decoding the operating system configuration component, and the hashed value computed from the operating system configuration component.

Furthermore, the resource information storage unit 50 binds together and stores the encryption key necessary for decoding the applications in every application stored in the application resource storage unit 80, and the hashed value(i.e., a standard hashed value) computed unequivocally from the applications.

That is, the resource information storage unit 50 binds together and stores the resource identification information of the inherent application, the encryption key necessary for decoding the application, and the hashed value computed from the application.

A medium information storage unit 90 stores a hashed value(i.e., a standard hashed value) that is information unequivocally computed from the system application resource information stored in every activation medium 130.

That is, the medium information storage unit 90 binds together and stores the medium identification information of the inherent activation medium 130 and the hashed value computed from the system activation resource information stored in the activation medium 130.

However, in the present embodiment, a user specifies combined information of the operating system configuration component and the application in early stage, and registers the combined information as the operating system configuration component by respectively specifying a desired operating system configuration component and the application from the operating system resource information and the application resource information.

Specifically, in an operating system(OS) configuration information storage unit 60, the operating system configuration information constitutes combined information of the operating system configuration component and the application in every activation medium 130, i.e. the medium identification information.

In this way, the operating system(OS) configuration information storage unit 60 binds together and stores the medium identification information of the inherent activation medium 130, and the operating system configuration information constituting combined information of the operating system configuration component and the application.

Furthermore, in the present embodiment, the user registers a plurality of combined information in the server device 20 with respect to the same type of the medium identification information, having an object of being capable of selecting a desired combination among a plurality of combinations as combination of the operating system configuration component and the application when the same type of the activation medium 130 is loaded on the client device 30.

That is, the operating system(OS) configuration information storage unit 60 binds together and stores the plurality of combined information with respect to the same type of the medium identification information and binds together and stores the medium identification information and the combined information of the operating system configuration component and the application.

A user management information storage unit 100 binds together and stores a password used in conducting user verification for the client device 30 on which the activation medium 130 is loaded in every activation medium 130, and an encryption key necessary for storing a predetermined personal information in a personal information storage unit 110.

That is, the user management information storage unit 100 binds together and stores the medium identification information of the inherent activation medium 130, the password necessary for conducting user verification for the client device 30, and the encryption key necessary for storing the personal information in the personal information storage unit 110.

The personal information storage unit 110 stores the personal information generated by usage of the user in the client device 30 on which the activation medium 130 is loaded in the every activation medium 130. Examples of the personal information constitutes document data, table data, and the like which are generated by office software. The personal information is stored in the personal information storage unit 110 in the state of encryption.

That is, the personal information storage unit 110 binds together and stores the medium identification information of the inherent activation medium 130, and the personal information encrypted by using the encryption key, the personal information being bound and stored with the medium identification information in the user management information storage unit 100.

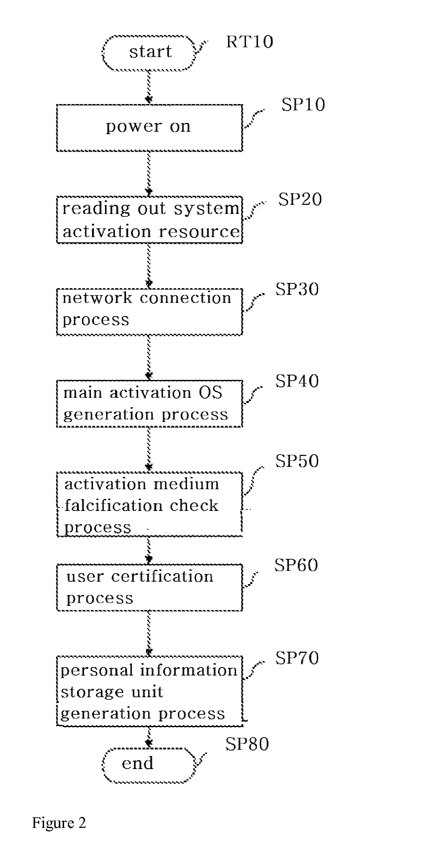

Figure 2 shows an information generation process procedure RT10 according to the present embodiment. For the information generation process procedure RT10, a user sets the activation medium 130 to the client device 30 in a step SP10. When power is on, in a step SP20, a control unit 230 of the client device 30 reads out system activation resource information and medium identification information from the activation medium 130. The system activation resource information is stored in a system activation resource information unit 170 of a initial activation operating system(OS) storage unit 160 and the medium identification information is stored in an identification storage unit 180 of the initial activation operating system(OS) storage unit 160.

In a step SP30, the control unit 230 confirms encrypted communication such as SSL communication via a communication line 40 with the server device 20, based on the system activation resource information stored in the system activation resource storage unit 170 and based on the medium identification information stored in the identification information storage unit 180 among the initial activation operating system(OS) storage unit 160.

In a step SP40, the control unit 230 generates an operating system configuration information acquisition request for acquiring an operating configuration information from the server device 20, and transmits the operating system configuration information acquisition request to the server device 20 via the communication line 40 by containing the medium identification information of the inherent activation medium 130 loaded on the client device 30.

The control unit 120 of the server device 20 reads out the operating system configuration information that is bound and stored with the medium identification information constituted in the operating system configuration information acquisition request from the operating system(OS) configuration storage unit 60 when the operating system configuration information acquisition request is received. Then, the control unit 20 transmits the operating system configuration information acquisition request to the client device 30 via the communication line 40.

The control unit 230 of the client device 30, when the operating system configuration information is received, generates an operating system configuration information selection screen based on the operating system configuration information. Displaying of the operating system configuration information selection screen encourages the user to select a desired combination among a plurality of combinations as combination of the operating system configuration component and the application.

Examples of the combination displayed in the operating system configuration information selection screen includes: a browser functional operating system containing combination of all of the operating system configuration components and browser; a simple functional operating system containing combination of all of the operating system configuration components, browser and office software; and a full functional operating system containing combination of all of the operating system configuration components and all of applications.

In this state, while the user sees the operating system configuration information selection screen displayed in the display unit 140, the control unit 230 generates the operating system configuration selection information showing information about selected combination when a desired combination is selected among a plurality of combination for the operating system configuration component and the application by the operating unit 150. The control unit 230 transmits the operating system configuration selection information to the server device 20 via the communication line 40.

A control unit 120 of the server device 20 reads out a desired application from an application resource information unit 80 and reads out a desired operating system configuration component from an operating system resource storage unit 70 based on combination of the operating system configuration component and the application shown by operating system configuration selection information when the operating system configuration selection information is received. The operating system configuration component and the application are stored as read-only and non-writable in the main application operating system storage unit. Thereby, the main application system is operated as readable only, depressing the effect such as virus and falsification.

Furthermore, the control unit 120 reads out an encryption key and a hashed value which are bound and stored with the resource identification information of the inherent application shown by the operating system selection information. The control unit 120 also reads out the encryption key and the hashed value which are bound and stored with the resource identification information of the inherent operating system configuration component shown by the operating system configuration selection information from the resource information storage unit 50.

The control unit 120 transmits the operating system configuration component, and the encryption key and the hashed value corresponding to the operating system configuration component to the client device 30 via the communication line 40. The control unit 120 also transmits the application, and the encryption key and the hashed value corresponding to the application to the client device 30 via the communication line 40.

The control unit 230 of the client device 30 computes the hashed value from the received operating system configuration component and compares the computed hashed value and the received hashed value when the operating system configuration component, and the encryption key and the hashed value corresponding to the operating system configuration component are received.

As a result, when the values are the same, the control unit 230 regards the received operating system configuration component as not being falsified, and decodes the operating system configuration component by the encryption key. However, when the values are different, the control unit 230 regards the received operating system configuration component as being falsified and ends the step of information generation process procedure RT10.

In this way, the control unit 230 of the client device 30 computes the hashed value from the received application and compares the computed hashed value and the received hashed value when the application, and the encryption key and the hashed value corresponding to the application are received.

As a result, when the values are the same, the control unit 230 regards the received application as not being falsified, and decodes the application by the encryption key. However, when the values are different, the control unit 230 regards the received application as being falsified and ends the step of information generation process procedure RT10.

Thus, when all of the received operating system configuration component and the application are not falsified, the control unit 230 generates the operating system and performs various operation based on the operating system by storing the application in the application storage unit 210 of the main operating system(OS) storage unit 190, and by storing the operating system configuration component in the operating system(OS) storage unit 200 of the main operating system(OS) storage unit 190.

In a step SP50, the control unit 230 of the client device generates an activation medium hashed value acquisition request from the server device 20 for acquiring the hashed value of the activation medium 130, and transmits the activation medium hashed value acquisition request to the server device 20 via the communication line 40.

When the activation medium hashed value acquisition request is received, the control unit 120 of the server device 20 reads out the hashed value bound and stored with the medium identification information of the inherent activation medium 130 loaded on the client device 30 from the medium information storage unit 90. Then, the control unit 120 transmits the hashed value to the client device 30 via communication line 40.

When the hashed value is transmitted from the server device 20, the control unit 230 of the client device 30 computes the hashed value from the system activation resource information stored in the activation medium 130, i.e. from the system activation resource information stored in the system activation resource storage unit 170 of the initial activation operating system(OS) storage unit. Then, the control unit 230 compares the computed hashed value with the received hashed value.

As a result, when the values are the same, the control unit 230 regards the activation medium 130 as not being falsified and then moves to a step of SP60. However, when the values are different, the control unit 230 regards the activation medium as being falsified, and then ends the step of the information generation process procedure RT10. Security for preventing falsification in a general medium can be enhanced without using a special medium by checking falsification of the activation medium combined with the server device 20.

In the step SP60, the control unit 230 of the client device generates a password acquisition request for acquiring a password of comparative object from the server device 20, when the password is given for conducting user verification corresponding to input operation of the user in the operation unit 150. Then, the control unit 230 transmits the password acquisition request to the server 20 via the communication line 40.

When the password acquisition request is received, the control unit 120 of the server device 20 reads out the password that is bound and stored with the medium activation information of the inherent activation medium 130 loaded on the client device 30 from the user management information storage unit 100. Then, the control unit 120 transmits the password to the client device 30 via communication line 40.

When the password transmitted from the server device 20, the control unit 230 compares the password transmitted from the serer device 20 and the password given by the user.

As a result, when the passwords are the same, the control unit 230 judges the user verification to be success, and then moves to the step of SP70. However, when the passwords are different, the control unit 230 judges the user verification to be failure, and ends the information generation process procedure RT10.

In the step of SP70, the control unit 230 generates a personal information acquisition request for acquiring personal information such as document data, table data generated by foretime usage of the user, and transmits the personal information acquisition request to the server device 20 via the communication line 40.

When the personal information acquisition request is received, the control unit 120 of the server device 20 reads out the encryption key that is bound and stored with the medium identification information from the user management information storage unit 100, while reading out the personal information that is bound and stored with the medium identification information of the inherent activation medium loaded on the client device 30 from the personal information storage unit 110. Then, the control unit 120 transmits the personal information and the encryption key to the client device 30 via the communication line 40.

When the personal information and the encryption key are received, the control unit 230 of the client device 30 decodes the encrypted personal information by the encrypted key, stores the acquired personal information in the personal information storage unit 220 of the main activation operating system(OS) storage unit 190, and moves to the step of SP80 to end the information generation process procedure RT10.

Then, the user can use the client device 30, so that the control unit 230 of the client device 30 performs various processes based on the operating system configuration component in the operating system(OS) storage unit 200 and the application stored in the application storage unit 210 among the main activation operating system(OS) storage unit 190 with reference to the personal information stored in the personal information storage unit 220 as circumstances demand.

According to the present embodiment, an operating system corresponding to a request of a user can be generated by selectively transmitting a desired operating system configuration component and an application among operating system resource information and application resource information managed in the server device 20.

Furthermore, according to the present embodiment, reliability for the security can be enhanced in the information generation system 10 by checking whether the operating system configuration component and the application transmitted from the server device 20, and the system activation resource information stored in the activation medium 130 are falsified or not.

Furthermore, in the present embodiment, as an activation medium, the activation medium 130 is applied in the present invention. However, the activation medium is not limited thereto and other kinds of activation medium stored in the system activation resource information for generating a desired operating system and the medium identification information of the inherent activation medium 130 may be applied by communication between client device 30 and the server device 20, and by connecting the client device 30 to the server device 20.

Furthermore, in the present embodiment, as an operating system resource unit, operating system(OS) resource storage unit 70 is applied in the preset invention. However, the operating system resource unit is not limited thereto and other kinds of operating system resource unit storing the operating system resource information that constitutes a plurality of operating system configuration component generating operating system used in the client device 30 may be applied.

Furthermore, in the present embodiment, as an application resource storage unit, the application resource storage unit 80 is applied. However, the application resource storage unit is not limited thereto and other kinds of application resource storage unit for storing application resource information that constitutes a plurality of applications may be applied.

Furthermore, in the present embodiment, as an operating system configuration information storage unit, the operating system(OS) configuration information storage unit 60 is applied. However, the operating system configuration information storage unit is not limited thereto. Other kinds of operating system configuration information storage unit may be applied, wherein the operating system configuration information storage unit binds together and stores a plurality of operating system configuration information with respect to the same medium identification information, and binds together and stores the medium identification information and the operating system configuration information constituting combination of the operating system configuration component and the application.

Furthermore, in the present embodiment, as a readout control unit, the control unit 230 is applied. However, the readout control unit is not limited thereto. Other kinds of the readout control unit may be applied, wherein the readout control unit reads out the system activation resource information and the medium identification from the activation 130 to store the system activation resource information in the system activation resource storage unit of the initial activation operating system(OS) storage unit 160, and stores the medium identification information in identification information storage unit 180 of the initial activation operating system(OS) storage unit 160.

Furthermore, in the present embodiment, as an operating system configuration information acquisition unit, the control unit 230 is applied. However, in the present invention, the operating system configuration information acquisition unit is not limited thereto. Other kinds of operating system configuration information acquisition unit for acquiring a plurality of operating system configuration information by reading out the operating system configuration information that is bound and stored with the medium identification information of the inherent activation medium 130 loaded on the client device 30 from the operating system(OS) configuration information storage unit 60 via the communication line 40 may be applied.

Furthermore, in the present embodiment, as a display unit, the control unit 230 is applied. However, in the present invention, the display unit is not limited thereto. Other kinds of display unit for showing the operating system configuration information selection screen may be applied, wherein the operating system configuration information selection screen encourages the user to select desired operating system configuration information among the plurality of operating system configuration information based on the plurality of acquired operating system configuration information in the display unit 140.

Furthermore, in the present embodiment, as an operating system generation unit, the control unit 230 is applied. However, in the present invention, the operating system generation unit is not limited thereto. When a desired operating configuration information is selected among the plurality of the operating system configuration information with respect to the selective operation of the user in the operation unit 150, other kinds of operating system generation unit may be applied, whereby a desired operating system configuration component is read out from the operating system(OS) resource storage unit 70 of the server device 20 based on the selected operating system configuration information, and the desired application is read out from the applications, and whereby the read out operating system configuration information is stored in the operating system(OS) storage unit 200 of the main acquisition operating system(OS) storage unit 190, and the read out application is stored in the application storage unit 210 of the main activation acquisition operating system(OS) storage unit 190.

Furthermore, in the present embodiment, as a resource information storage unit, the resource information storage unit 50 is applied. However, in the present invention, the resource information storage unit is not limited thereto. Other kinds of the resource information storage unit may be applied, wherein the resource information storage unit binds together and stores the resource identification information of the inherent operating system configuration component and the standard hashed value computed from the operating system configuration component, and binds together and stores the resource identification information of the inherent application and standard hashed value computed from the application.

Furthermore, in the present embodiment, as a medium information storage unit, the medium information storage unit 90 is applied. However, in the present invention, the medium information storage unit is not limited thereto. Other kinds of the medium information storage unit may be applied, wherein the medium information storage unit binds together and stores the medium identification information of the inherent activation medium 130 and the standard hashed value computed from the system acquisition resource information stored in the activation medium 130.

Furthermore, in the present embodiment, as an activation medium verification unit, the control unit 230 is applied. However, in the present invention, the activation medium verification unit is not limited thereto. Other kinds of activation medium verification unit for verifying the same type of the activation medium 130 may be applied by reading out the standard hashed value that is bound and stored with the medium identification information of the inherent activation medium 130 loaded on the client device 30 from the medium information system unit 90 of the server device 20, by computing comparative hashed value from system activation resource information stored in system activation resource storage unit 170 of the initial activation operating system(OS) storage unit 160, and by computing the computed comparative hashed value and the standard hashed value.

Furthermore, in the present embodiment, the operating resource information unit, the application resource information storage unit, and personal information storage unit are placed on the server device 20. However, these storage units may be placed on the client device 30.

Furthermore, in the present embodiment, when power is on state(on activation), the operating system configuration information selection screen is automatically displayed. However, automatic activation can be possible by specifying operating configuration information of default condition without displaying the operating system configuration information selection screen. In the information generation system, the operating is generated. Thereafter, the operating system configuration information selection screen may be displayed in other operation to change operating system configuration by the user.

### DESCRIPTION OF REFERENCE NUMERALS

- 10: --- information generation system
- 20: --- server device
- 30: --- client device
- 40: --- communication line
- 50: --- resource information storage unit
- 60: --- operating system(OS) configuration information storage unit
- 70: --- operating system(OS) resource storage unit
- 80: --- application resource storage unit
- 90: --- media information storage unit
- 100: --- user management information storage unit
- 110: --- personal information storage unit
- 120: --- control unit
- 130: --- activation medium
- 140: --- display unit
- 150: --- operation unit
- 160: --- initial activation operating system(OS) storage unit
- 170: --- system activation resource storage unit
- 180: --- identification information storage unit
- 190: --- main activation operating system(OS) storage unit
- 200: --- operating system(OS) storage unit
- 210: --- application storage unit
- 220: --- personal information storage unit
- 230: --- control unit

## Claims

1. An information generation system comprising a server device and a client device,
wherein the server device and the client device on which a predetermined activation medium is loaded are connected via a predetermined communication line,
wherein, in the activation medium, system activation resource information for generating a predetermined operation system and medium identification information of the inherent activation medium are stored by connecting the client device to the server device, and by communication between the client device and the server device,
wherein the server device comprises:
an operation system resource storage unit storing operation system resource information which constitutes a plurality of operation system configuration components for generating the operation system used in the client device;
an application resource storage unit storing application resource information which constitutes a plurality of applications; and
an operating system configuration information storage unit binding together and storing the medium identification information of the inherent activation medium and the operating system configuration information which constitutes combined information of the operating system configuration components and the applications, and binding together and storing the identical medium identification information and the plurality of operating system configuration information,
wherein the client device comprises:
a readout control unit storing the system activation resource information in the system activation resource storage unit of an initial activation operating system storage unit and, and storing the medium identification information in an identification information storage unit of the initial activation operating system storage unit to read out the system activation resource information and the medium identification information from the activation medium when the activation medium is loaded on the client device;
an operating system configuration information acquisition unit acquiring the plurality of operating system configuration information by reading out the operating system configuration information that is bound and stored with the medium identification information of the inherent activation medium loaded on the client device from the operating system configuration information storage unit of the server device;
a display control unit displaying an operating system configuration information selection screen for prompting an user to select a desired operating system configuration information among the plurality of operating system configuration information based on the plurality of acquired operating system configuration information; and
an operating system generation unit generating a desired operating system by reading out the desired operating system configuration component from the operating system resource storage unit of the server device, by reading out the desired application from the application resource storage unit and
storing the read out operating system configuration component in the operating system storage unit of the main activation operating system storage unit, and by storing the read out application in the application storage unit of the main activation operating system storage unit, based on the selected operating system configuration information when the desired operating system configuration information is selected among the plurality of the operating system configuration information corresponding to the selective operation of a user in an operation unit.

2. The information generation system according to the claim 1,
wherein the server device further comprises:
a resource information storage unit binding together and storing resource identification information of the inherent operating system configuration component and a standard hashed value computed from the operating system configuration component, and binding together and storing resource identification information of the inherent application and a standard hashed value computed from the application,
wherein the operating system generation unit comprises:
reading out the standard hashed value that is bound and stored with the resource identification information of the inherent operating system configuration component of the read out object from the resource information storage unit of the server, and reading out the standard hashed value that is bound and stored with the resource identification information of the inherent application of the read out object;
computing the hashed value of a comparative object from the operating system configuration component which is read out from the operating system resource storage unit of the server, and
computing the hashed value of the comparative object from the application which is read out from the application resource storage unit;
generating the desired operating system by storing the operating system configuration component in the operating system storage unit of the main activation operating system storage unit, and by storing the application in the application storage unit of the main activation operating storage unit, when the computed hashed value of the comparative object and the standard hashed value are compared, and the computed hashed value and the standard hashed value are the same for the operating system configuration component and the application.

3. The information generation system according to the claim 1,
wherein the server device further comprising:
a medium information storage unit binding together and storing the medium identification information of the inherent activation medium and a hashed value computed from the system activation resource information stored in the activation medium,
wherein the client device further comprising:
reading out the standard hashed value that is bound and stored with the medium activation information of the inherent activation medium which is loaded on the client device from the medium information storage unit of the server device;
computing the hashed value of the comparative object from the system activation resource information stored in the system activation resource storage unit of the initial activation operating system storage unit;
verifying the same type of the activation medium in an activation medium verification unit by comparing the hashed value of the computed comparative object and the standard hashed value.

4. A method of generating information for an information generation system in which a client device and a server device on which a predetermined activation medium is loaded are connected via a predetermined communication line,
wherein, in the activation medium, a system activation resource information for generating a desired operation system and a medium identification information of the inherent activation medium are stored by connecting the client device to the server device, and by communication between the client device and the server device,
wherein the server device comprises:
an operation system resource storage unit storing operation system resource information which constitutes a plurality of operation system configuration components for generating the operation system used in the client device;
an application resource storage unit storing application resource information which constitutes a plurality of applications;
an operating system configuration information storage unit binding together and storing the medium identification information of the inherent activation medium and the operating system configuration information which constitutes combined information of the operating system configuration components and the applications, and binding together and storing the identical medium identification information and the plurality of operating system configuration information,
wherein the method comprises:
a readout step, when the activation medium is loaded on the client device, storing the system activation resource information in the system activation resource storage unit of initial activation operating storage unit, and storing the medium identification information in the identification information storage unit of the initial activation operating system storage unit by reading out the system activation resource information and the medium identification information from the activation medium;
an operating system configuration information acquisition step acquiring the plurality of operating system configuration information by reading out the operating system configuration information that is bound and stored with the medium identification information of the inherent activation medium loaded on the client device from the operating system configuration information storage unit of the server device via the communication line;
a display step displaying an operating system configuration information selection screen on a display unit for prompting an user to select desired operating system configuration information among the plurality of operating system configuration information based on the plurality of acquired operating system configuration information; and
an operating system generation step generating a desired operating system, when the desired the operating system is selected among the plurality of operating system configuration information corresponding to selective operation of a user in an operating unit, by reading out the desired operating system configuration component from the operating system resource storage unit of the server device based on the selected operating system configuration information, by reading out the desired application from the application resource storage unit to store the operating system configuration component in the operating system storage unit of the medium activation operating system storage unit, and by storing the application in an activation system unit of the medium activation operating system storage unit.

5. The method of information generation according to claim 4,
wherein the server device further comprises:
a resource information storage unit binding together and storing resource identification information of the inherent operating system configuration component and a standard hashed value computed from the operation system configuration component, and binding together and storing resource identification information of the inherent application and a hashed value computed from the application,
wherein the operating system generation step comprises:
reading out the standard hashed value that is bound and stored with the resource identification information of the inherent operating system configuration component of the read out object, and reading out from the standard hashed value that is bound and stored with the resource identification information of the inherent application of the read out object, from the resource information storage unit of the server;
computing the hashed value of the comparative object from the operating system configuration component which is read out the operating system resource storage unit of the server, and computing the hashed value of the comparative object from the application which is read out from the application resource storage unit;
generating the desired operating system by storing the operating system configuration component in the operating system storage unit of the main activation operating system storage unit, and, by storing the application in the application storage unit of the main activation operating system storage unit, when the computed hashed value of the comparative object and the standard hashed value are compared, and the computed hashed value and the standard hashed value are the same for the operating system configuration component and the application.

6. The method of information generation according to claim 4,
wherein the server device further comprising:
a medium information storage unit binding together and storing the medium identification information of the inherent activation medium and the hashed value computed from the system activation resource information stored in the activation medium;
wherein the method comprises:
reading out the standard hashed value that is bound and stored with the medium activation information of the inherent activation medium which is loaded on the client device from the medium information storage unit of the server device;
computing the hashed value of the comparative object from the system activation resource information stored in the system activation resource information of the initial activation operating system storage unit;
verifying the same type of the activation medium in an activation medium verification step by comparing the hashed value of the computed comparative object and the standard hashed value.

7. A generating information system in which a client device and a server device on which a predetermined activation medium is loaded are connected via a predetermined communication line, wherein, in the activation medium, a system activation resource information for generating a predetermined operation system and a medium identification information of the inherent activation medium are stored by connecting the client device to the server device, and by communication between the client device and the server device,
wherein the server device comprises:
an operating system configuration information storage unit binding together and storing the medium identification information of the inherent activation medium and the operating system configuration information which constitutes combined information of the operating system configuration component and the application, and binding together and storing the identical medium identification information and the plurality of operating system configuration information,
wherein the client device comprises:
an operating system resource storage unit storing operating system resource information constituting the plurality of operating system configuration components for generating the operating system used in the client device;
an application resource storage unit storing application resource information constituting a plurality of applications;
a readout control unit storing the system activation resource information in the system activation resource storage unit of the initial activation operating system storage unit, and storing the medium identification information in an identification information storage unit of the initial activation operating system storage unit by reading out the system activation resource information and the medium identification information from the activation medium when the activation medium is loaded on the client device;
an operating system configuration information acquisition unit acquiring the plurality of the operating system configuration information by reading out the operating system configuration information that is bound and stored with the medium identification information of the inherent activation medium which is loaded on the client device from the operating system configuration information storage unit of the server device;
a display control unit displaying an operating system configuration information selection screen on a display unit for prompting an user to select a desired operating system configuration information among the plurality of operating system configuration information based on the plurality of acquired operating system configuration information; and
an operating system generation unit generating a desired operating system by reading out the desired operating system configuration component from the operating system resource storage unit of the server device, by reading out a desired application from the application resource storage unit to store the read out operating system configuration component in the operating system storage unit of the main activation operating system storage unit, and by storing the read out application in the application storage unit of the main activation operating system storage unit, based on the selected operating system configuration information when the desired operating system configuration information is selected among the plurality of the operating system configuration information corresponding to selective operation of a user in an operation unit.

8. A method of generating information for an information generation system in which a client device and a server device on which a predetermined activation medium is loaded are connected via a predetermined communication line,
wherein, in the activation medium, a system activation resource information for generating a predetermined operation system and a medium identification information of the inherent activation medium are stored by connecting the client device to the server device, and by communication between the client device and the server device,
wherein the server device comprises:
an operating system configuration information storage unit binding together and storing the medium identification information of the inherent activation medium and the operating system configuration information which constitutes combined information of the operating system configuration component and the application, and binding together and storing an identical medium identification information and the plurality of operating system configuration information,
wherein the client device comprises:
an operating system resource storage unit storing an operating system resource information constituting the plurality of operating system configuration components for generating the operating system used in the client device;
an application resource storage unit storing an application resource information constituting a plurality of applications;
the method comprises:
a readout step storing system activation resource information in the system activation resource storage unit of the initial activation operating storage unit and storing medium identification information in an identification information storage unit of the initial activation operating system storage unit by reading out the system activation resource information and the medium identification information from the activation medium when the activation medium is loaded on the client device;
an operating system configuration information acquisition step acquiring the plurality of operating system configuration information by reading out the operating system configuration information that is bound and stored with the medium identification information of the inherent activation medium loaded on the client device from the operating system configuration information storage unit of the server device;
a display step displaying an operating system configuration information selection screen on a display unit for prompting an user to select a desired operating system configuration information among the plurality of operating system configuration information based on the plurality of acquired operating system configuration information; and
an operating system generation step generating a desired operating system, when a desired operating system is selected among the plurality of the operating system configuration information corresponding to selective operation of a user in an operating unit, by reading out the desired operating system configuration component from the operating system resource storage unit of the server device based on the selected operating system configuration information, by reading out the desired application from the application resource storage unit to store the operating system configuration component in the operating system storage unit of the main activation operating system storage unit, and by storing the read out application in an activation system unit of the main activation operating system storage unit.
